(19)

Europäisches
Patentamt
European
Patent Office
Office européen
des brevets

(11) **EP 4 629 611 A1**

## (12) EUROPEAN PATENT APPLICATION

(43) Date of publication:
08.10.2025 Bulletin 2025/41

(21) Application number: 25161350.1

(22) Date of filing: 03.03.2025

(51) International Patent Classification (IPC):
*H04N 9/31* (2006.01)       *G02B 30/00* (2020.01)
*H04N 13/302* (2018.01)      *H04N 13/363* (2018.01)
*G03B 21/00* (2006.01)

(52) Cooperative Patent Classification (CPC):
**H04N 9/31; G02B 30/00; H04N 13/302;**
**H04N 13/363;** G03B 21/005; H04N 13/261;
H04N 13/271; H04N 13/275; H04N 13/293;
H04N 13/30; H04N 13/366

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 03.04.2024 TW 113112682

(71) Applicant: **Optoma Coporation**
**New Taipei City 231633 (TW)**

(72) Inventor: **WANG, Wen-Tai**
**New Taipei City 231633 (TW)**

(74) Representative: **Ter Meer Steinmeister & Partner**
**Patentanwälte mbB**
**Nymphenburger Straße 4**
**80335 München (DE)**

(54) **PROJECTION SYSTEM AND METHOD OF FORMING STEREOSCOPIC IMAGE ON A NON PLANAR SURFACE**

(57)      A projection system including a non-planar projection surface, a projection apparatus and a controller is provided. The controller is communicatively connected to the projection apparatus. The controller provides stereoscopic image information and transmits the stereoscopic image information to the projection apparatus. The projection apparatus projects an image beam onto the non-planar projection surface according to the stereoscopic image information. A stereoscopic image is presented within a field of view of the image beam. A method of forming a stereoscopic image is also provided.

FIG. 1

EP 4 629 611 A1

**Description**

This application claims of Taiwan application serial no. 113112682, filed on April 3, 2024.

BACKGROUND

Technical Field

The disclosure is related to an optical system and a method of forming an image, and in particular relates to a projection system and a method of forming a stereoscopic image applied to the projection system.

Description of Related Art

Currently, naked-eye 3D products applied to personal electronic device include gaming consoles, computer monitors, and laptops, etc. On outdoor billboards, naked-eye 3D technology, utilizing architectural structures in conjunction with eye-catching content, has generated successive waves of urban landscape topics of discussion.

In outdoor large-scale naked-eye 3D displays, an L-shaped LED display, in conjunction with 3D content, may be utilized to generate a naked-eye 3D effect through visual illusion viewed by the human eye. In indoor large-scale naked-eye 3D displays, the current technology predominantly utilizes angular (both convex and concave, e.g., L-shaped) LED display devices. The 3D visual effect is achieved through the implementation of high contrast and binocular parallax.

However, the current naked-eye 3D technology still has the following problems. LED displays are expensive, so it is difficult to popularize LED naked-eye 3D. The display range of LED displays is fixed and cannot be adjusted according to the field or application purpose. Furthermore, if a projector is used to project an image with a 3D object, and if no image processing is performed, the image will be deformed and there will be no stereoscopic effect. In addition, the display device cannot dynamically adjust the position of the 3D image according to the position of the human eye.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

SUMMARY

A projection system and a method of forming a stereoscopic image are provided in the disclosure. A projection apparatus is utilized to project an image beam, enabling the viewer to view a stereoscopic image presented within the field of view of the image beam, wherein the viewer is not required to wear any auxiliary devices (e.g., polarized glasses or liquid crystal glasses), thereby achieving a naked-eye 3D effect.

The other objectives and advantages of the disclosure may be further understood from the descriptive features disclosed in the disclosure.

The object is solved by the features of the independent claims. Preferred embodiments are given in the dependent claims.

In order to achieve one of, or portions of, or all of the above objectives or other objectives, an embodiment of the disclosure provides a projection system, which includes a non-planar projection surface, a projection apparatus, and a controller. The controller is communicatively connected to the projection apparatus. The controller is configured to provide stereoscopic image information and transmit the stereoscopic image information to the projection apparatus. The projection apparatus is configured to project an image beam onto the non-planar projection surface according to the stereoscopic image information. A stereoscopic image is presented within a field of view of the image beam.

In one or more embodiments, the projection system may further comprise a terminal apparatus.

In one or more embodiments, the controller may be communicatively connected to the terminal apparatus.

In one or more embodiments, the terminal apparatus may be configured to provide at least one of a projection position, projection parameters of the projection position, and a projection range to the controller.

In one or more embodiments, the controller may be configured to convert a 3D content image into the stereoscopic image information according to the projection position, the projection parameters of the projection position, the projection range, and a 3D projection plane.

In one or more embodiments, the controller may be configured to provide the stereoscopic image information to the projection apparatus.

In one or more embodiments, the projection apparatus may be configured to generate the image beam according to the stereoscopic image information, so that the stereoscopic image may be formed on the 3D projection plane within the field of view of the image beam.

In one or more embodiments, the 3D content image at least may comprise a 3D object, an outer frame, a derived background, or an object shadow corresponding to the 3D object.

In one or more embodiments, the controller may be configured to determine a position of the stereoscopic image on the 3D projection plane according to a preset eye position.

In one or more embodiments, the projection system may further comprise a camera, communicatively connected to the controller.

In one or more embodiments, the camera may be configured to sense a position of at least one eye within the field of view of the image beam.

In one or more embodiments, wherein the controller may be configured to obtain a preset eye position according to the position of the at least one eye.

In one or more embodiments, the controller may be configured to determine a position of the stereoscopic image on the 3D projection plane according to the preset eye position.

In one or more embodiments, the controller may be configured to generate a transformation matrix according to an angle of projection of the projection position, a 3D range adjustment matrix, and a preset eye position.

In one or more embodiments, the controller may be configured to convert coordinate values of each pixel of an original image in the projection range into coordinate values corresponding to the 3D projection plane by using the transformation matrix to convert the 3D content image into the stereoscopic image information.

In one or more embodiments, the controller may be configured to generate the 3D range adjustment matrix according to the projection range and the 3D projection plane.

In one or more embodiments, the 3D range adjustment matrix may be a matrix that converts a matrix formed by coordinate values of four endpoints of the projection range into a matrix formed by coordinate values of four endpoints of the 3D projection plane.

In one or more embodiments, the controller may be configured to control the image beam generated by the projection apparatus to form a mask region in a region of the 3D projection plane that does not display the stereoscopic image.

In one or more embodiments, the controller may be communicatively connected to an ambient light sensor and an ambient light source.

In one or more embodiments, the ambient light sensor may be configured to provide an ambient light brightness signal.

In one or more embodiments, the controller may be configured to provide an ambient light source adjustment signal.

In one or more embodiments, the controller may be configured to adjust brightness of an output beam of the ambient light source according to the ambient light brightness signal, thereby generating a high contrast between brightness of a floating light of the image beam and the brightness of the output beam of the ambient light source.

In another aspect a method of forming stereoscopic image is provided, comprising: providing stereoscopic image information and transmitting the stereoscopic image information to a projection apparatus through a controller; projecting an image beam onto a non-planar projection surface through the projection apparatus; and projecting the image beam through the projection apparatus according to the stereoscopic image information, wherein a stereoscopic image is presented within a field of view of the image beam.

In one or more embodiments, the method of forming stereoscopic image may further comprise providing a projection position, projection parameters of the projection position, and a projection range to the controller through a terminal apparatus; converting a 3D content image into the stereoscopic image information through the controller according to the projection position, the projection parameters of the projection position, the projection range, and a 3D projection plane; providing the stereoscopic image information to the projection apparatus through the controller; generating the image beam through the projection apparatus according to the stereoscopic image information; and forming the stereoscopic image on the 3D projection plane within the field of view of the image beam.

In one or more embodiments, the 3D content image at least comprises a 3D object, an outer frame, a derived background, or an object shadow corresponding to the 3D object.

In one or more embodiments, method of forming stereoscopic image may further comprise determining a position of the stereoscopic image on the 3D projection plane through the controller according to a preset eye position.

In one or more embodiments, the method of forming stereoscopic image may further comprise sensing a position of at least one eye within the field of view of the image beam through a camera; obtaining a preset eye position according to the position of the at least one eye; and determining a position of the stereoscopic image on the 3D projection plane according to the preset eye position through the controller.

In one or more embodiments, the method of forming stereoscopic image may further comprise generating a transformation matrix through the controller according to an angle of projection of the projection position, a 3D range adjustment matrix, and a preset eye position; and converting coordinate values of each pixel of an original image in the projection range into coordinate values corresponding to the 3D projection plane so as to convert the 3D content image into the stereoscopic image information through the controller using the transformation matrix.

In one or more embodiments, the method of forming stereoscopic image may further comprise generating the 3D range adjustment matrix through the controller according to the projection range and the 3D projection plane, wherein the 3D range adjustment matrix is a matrix that converts a matrix formed by coordinate values of four endpoints of the projection range into a matrix formed by coordinate values of four endpoints of the 3D projection plane.

In one or more embodiments, the method of forming stereoscopic image may further comprise controlling the image beam generated by the projection apparatus, forming a mask region in a region of the 3D projection plane that does not display the stereoscopic image through the controller.

In one or more embodiments, the method of forming stereoscopic image may further comprise receiving an ambient light brightness signal through the controller; and adjusting brightness of an output beam of the ambient light source through the controller according to the ambient light brightness signal, thereby generating a high contrast between brightness of a floating light of the image beam and the brightness of the output beam of the ambient light source.

Based on the above, in the projection system and the method of forming a stereoscopic image according to the embodiments of the disclosure, stereoscopic image information is provided and the stereoscopic image information is transmitted to a projection apparatus through a controller. An image beam is projected onto a non-planar projection surface through the projection apparatus, so that the stereoscopic image is presented within a field of view of the image beam. Therefore, the projection system and the method of forming the stereoscopic image may generate a good stereoscopic image by using the projection apparatus without the necessity for viewers to wear stereoscopic image-generating equipment. In addition to substantially reducing costs, the aforementioned projection system and method of forming the stereoscopic image allow for the adjustment of the position of the stereoscopic image presentation in accordance with the venue or intended application.

Other objectives, features and advantages of the disclosure will be further understood from the further technological features disclosed by the embodiments of the disclosure wherein there are shown and described preferred embodiments of this disclosure, simply by way of illustration of modes best suited to carry out the disclosure.

BRIEF DESCRIPTION OF THE DRAWINGS

FIG. 1 is a block diagram of a projection system according to an embodiment of the disclosure.

FIG. 2 is a schematic diagram of a projection system obtaining the projection position, the projection parameters of the projection position and the projection range under the spatial coordinate system according to an embodiment of the disclosure.

FIG. 3 is a schematic diagram of a projection system adjusting the projection range to the position of the 3D projection plane according to an embodiment of the disclosure.

FIG. 4 is a schematic diagram of the 3D projection plane in FIG. 3 from another perspective.

FIG. 5 is a schematic diagram of the position of a preset eye position in the coordinate system.

FIG. 6 is a schematic diagram of 3D content in a projection system according to an embodiment of the disclosure.

FIG. 7 is a schematic diagram of a projection system that reduces stray light according to an embodiment of the disclosure.

FIG. 8 is a schematic diagram of a projection system forming a mask region on the 3D projection plane according to an embodiment of the disclosure.

FIG. 9 is a schematic diagram of a projection system sensing the positions of eyes in space through a camera according to an embodiment of the disclosure.

FIG. 10 is a flowchart of a method of forming a stereoscopic image according to an embodiment of the disclosure.

FIG. 11 is a flowchart of a method of forming a stereoscopic image, in which the projection position, projection range, and 3D projection plane under a coordinate system are obtained through a terminal apparatus according to an embodiment of the disclosure.

FIG. 12 is a flowchart of a method of forming a stereoscopic image, in which the position of the stereoscopic image on a 3D projection plane is determined through a preset eye position according to an embodiment of the disclosure.

FIG. 13 is a flowchart of converting the 3D image into stereoscopic image information in step S240 of FIG. 11.

FIG. 14 is a flowchart of generating a 3D range adjustment matrix in step S242 of FIG. 13.

FIG. 15 is a flowchart of a method of forming a stereoscopic image, in which the positions of eyes in space are sensed through a camera according to an embodiment of the disclosure.

FIG. 16 is a flowchart of a method of forming a stereoscopic image, in which a mask region is formed on the 3D projection plane according to an embodiment of the disclosure.

FIG. 17 is a flowchart of a method of forming a stereoscopic image, in which the impact of floating light on the perception of the stereoscopic image of the viewer is eliminated according to an embodiment of the disclosure.

DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top," "bottom," "front," "back," etc., is used with reference to the orientation of the Figure(s) being described. The components of the disclosure may be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

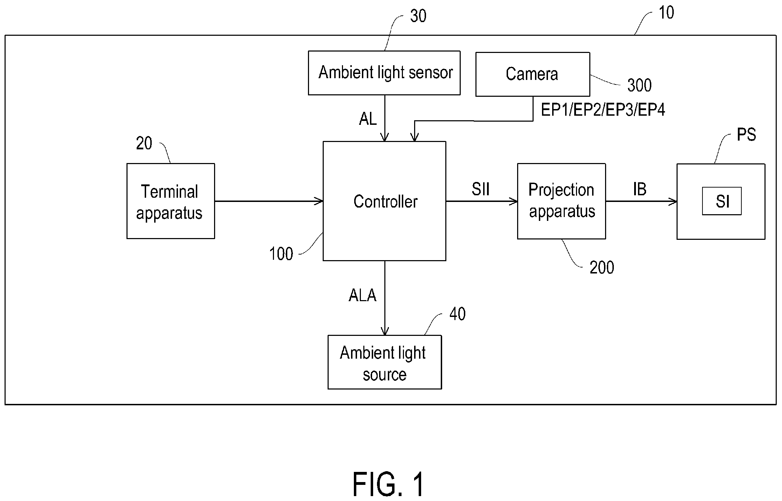

FIG. 1 is a block diagram of a projection system according to an embodiment of the disclosure. Referring to FIG. 1 first, an embodiment of the disclosure provides a projection system 10, which includes a non-planar projection surface PS, a projection apparatus (i.e., a projector) 200, and a controller 100. In another embodiment of the disclosure, the projection system 10 may further include a terminal apparatus 20. The projection apparatus 200 is configured to project the image beam IB onto the non-planar projection surface PS. The controller 100 is communicatively connected to the projection apparatus 200. The controller 100 is configured to provide stereoscopic image information SII and transmit the stereoscopic image information SII to the projection apparatus 200. The projection apparatus 200 is configured to project the image beam IB onto the non-planar projection surface PS according to the stereoscopic image information SII. The stereoscopic image SI is presented within the field of view of the image beam IB. Communication connection is defined as the transmission of signals between different devices through wired or wireless connections.

In an embodiment, the projection apparatus 200 may include, for example, a light source module (not shown), a light valve (not shown), and a projection lens (not shown). The light source module is configured to provide an illumination beam (not shown). The light source module includes a light source. The light source module may also include elements such as wavelength conversion elements, condensers, filter elements, light guide elements, etc. The light source module is configured to provide light beams of different wavelengths as sources of the illumination beam. The light source may be light emitting diodes (LED), laser diodes (LD), or a combination thereof. The light valve is disposed on the transmission path of the illumination beam to convert the illumination beam into the image beam IB. The light valve is, for example, a reflective light modulator such as a liquid crystal on silicon panel (LCoS panel) and a digital micro-mirror device (DMD). In some embodiments, the light valve may also be a transmissive optical modulator, such as a transparent liquid crystal panel, an electro-optical modulator, a magneto-optical modulator, or an acousto-optic modulator (AOM), etc. In addition, the projection lens includes, for example, a combination of one or more optical lenses with diopter, such as various combinations of non-planar lenses such as biconcave lenses, biconvex lenses, meniscus lenses, convex-concave lenses, plano-convex lenses, and plano-concave lenses. In an embodiment, the projection lens may further include a plane optical lens to project the image beam IB from the light valve to the non-planar projection surface PS in a reflective manner.

In an embodiment, the controller 100 is, for example, a computer or a laptop. The controller 100 further includes at least one processor. The processor includes a central processing unit (CPU), a microprocessor, a digital signal processor (DSP), a programmable controller, a programmable logic device (PLD), or other similar devices, or a combination of these devices, which is not limited in the disclosure. Furthermore, in an embodiment, the controller 100 executes at least one program to implement at least one function. At least one program is stored in at least one memory unit, and the at least one program is accessed by the controller 100. The memory unit is, for example, a random-access memory (RAM), a read-only memory (ROM), a flash memory, a hard disk drive (HDD), and/or a solid-state drive (SSD).

In an embodiment, the controller 100 has an image source to provide image content to the projection apparatus 200. The image content is, for example, an original image.

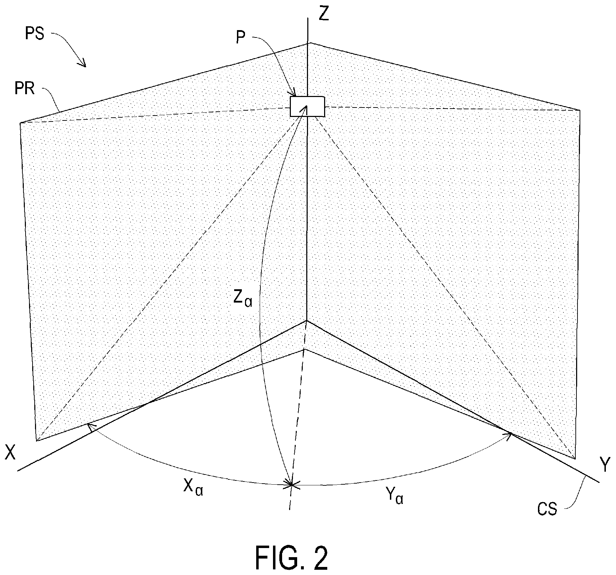

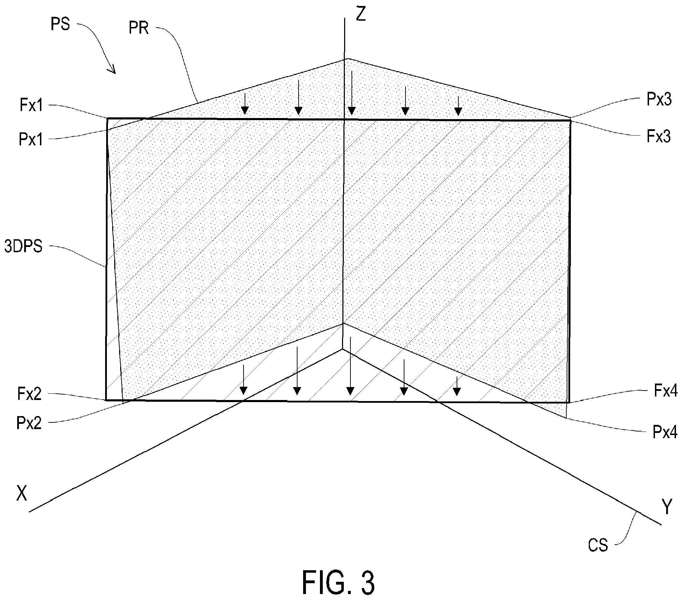

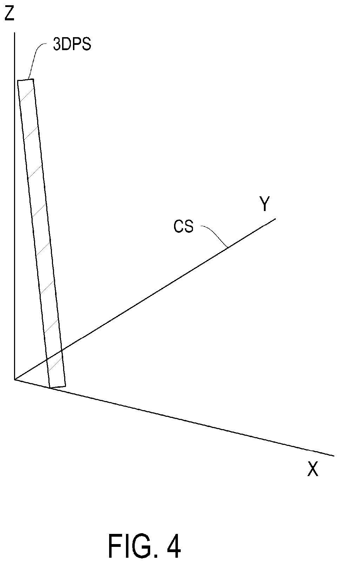

FIG. 2 is a schematic diagram of a projection system obtaining the projection position, the projection parameters of the projection position and the projection range under a spatial coordinate system according to an embodiment of the disclosure. FIG. 3 is a schematic diagram of a projection system adjusting the projection range to the position of the 3D projection plane according to an embodiment of the disclosure. FIG. 4 is a schematic diagram of the 3D projection plane in FIG. 3 from another perspective.

Referring to FIG. 2 to FIG. 4, in this embodiment, the non-planar projection surface PS is composed of two planes with an included angle (the included angle is greater than 0 degrees) as shown in FIG. 2. The optimal implementation mode is that the two planes are perpendicular to each other, and may be composed of two screens or a single screen with an included angle, but the disclosure is not limited thereto. The terminal apparatus 20 in FIG. 1 is, for example, a handheld device such as a smartphone or a tablet. The terminal apparatus 20 has a photographing device (camera). An image capturing application may be installed and executed in the terminal apparatus 20. The terminal apparatus 20 also has an input device. The input device is, for example, a touch interface, which is configured to receive a known model number of the projection apparatus 200 input by a user, so that the projection parameter of the projection apparatus 200 may be known. The projection parameter of the projection apparatus 200 is, for example, the angle of projection with respect to the non-planar projection surface PS. When the terminal apparatus 20 executes the image capturing application and captures the original image projected by the projection apparatus 200 on the non-planar projection surface PS through the photographing device, the terminal apparatus 20 executes the image capturing application to obtain the projection range PR according to the range of the original image. The original image is formed by the projection apparatus 200 projecting the image beam IB, and the range of the original image displayed on the non-planar projection surface PS is defined as the projection range PR. The four corners of the projection range PR have four three-dimensional coordinate values. In other embodiments, the projection range PR may include more three-dimensional coordinate values, such as six. In addition, the terminal apparatus 20 is assumed to be the projection apparatus 200, so the terminal apparatus 20 executes the image capturing application to obtain the projection position P corresponding to the projection range PR, where the projection position P includes three-dimensional coordinate values. In this embodiment, the terminal apparatus 20 is communicatively connected to the controller 100. The terminal apparatus 20 provides signals corresponding to the projection position P, the projection parameters of the projection position P, and the projection range PR to the controller 100, that is, the controller 100 obtains the projection position P, the projection parameters of the projection position P, and the projection range PR.

In an embodiment, the controller 100 has an input device. The input device is, for example, a keyboard, a mouse or a touch interface, and the input device is configured to receive the distance data and the projection parameters of the projection apparatus 200 input by the user, so that the controller 100 obtains the projection position P, the projection parameters of the projection position P, and the projection range PR. To further explain, through actual measurements of various distances (e.g., the farthest distance between the projection apparatus 200 and the non-planar projection surface PS, the distance between the projection apparatus 200 and the ground, the distance between the projection apparatus 200 and the four corners of the projection range PR, etc.) between the positions of the projection apparatus 200 and the position of the non-planar projection surface PS by the user in the space where the non-planar projection surface PS is placed, and through the known model of the projection apparatus 200, the projection parameters of the projection apparatus 200 may be known, such as the size of the projectable projection range PR and the angle of projection toward the non-planar projection surface PS. Therefore, the controller 100 obtains the projection position P, the projection parameters of the projection position P and the projection range through the operation of the user on the input device.

Refer to FIG. 3 and FIG. 4, the controller 100 obtains the projection position P, the projection parameters of the projection position P, and the projection range. The user may adjust the projection range PR of the original image to the position and size of the 3D projection plane 3DPS according to the projection position P and the projection parameters of the projection position P through the application program executed by the controller 100. In addition, the angle (e.g., inclination) between the 3D projection plane 3DPS and the Z-axis of the spatial coordinate system CS may also be adjusted by the operation of the user on the input device, as shown in FIG. 4. For the spatial coordinate system CS established in the space of the non-planar projection surface PS, the position of the projection apparatus 200 is taken as the origin. The 3D projection plane 3DPS is a virtual surface in space, and the 3D projection plane 3DPS is a virtual surface that visually presents a stereoscopic image SI to the viewer.

To further explain, the application program executed by the controller 100 adjusts the projection range PR to the position of the 3D projection plane 3DPS according to the projection position P under the spatial coordinate system CS, the projection parameters of the projection position P, and the projection range PR. The projection apparatus 200 is adapted to be disposed at the projection position P. The controller 100 converts the 3D content image 3DC into stereoscopic image information SII according to the projection position P, the projection parameters of the projection position P, the projection range PR and the 3D projection plane 3DPS. The controller 100 provides the stereoscopic image information SII to the projection apparatus 200. The projection apparatus 200 generates the image beam IB according to the stereoscopic image information SII and projects the image beam IB onto the non-planar projection surface PS, so that the viewer may view the stereoscopic image SI formed on the 3D projection plane 3DPS within the field of view of the image beam IB. The field of view of the image beam IB is defined as the range where the viewer may view the stereoscopic image SI, that is, the viewing position of the viewer is on the same side as the projection apparatus 200 and the viewer faces the non-planar projection surface PS, and is in a space within the included angle range of the non-planar projection surface PS.

The process of the controller 100 controlling the projection apparatus 200 to form the stereoscopic image SI is described in detail below.

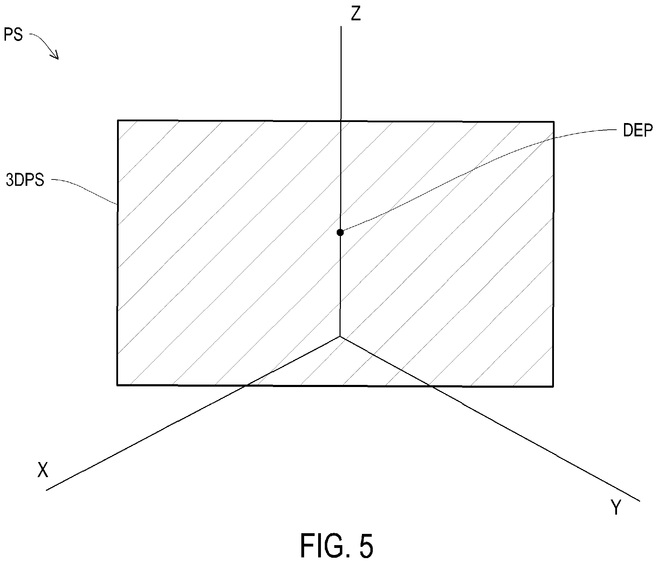

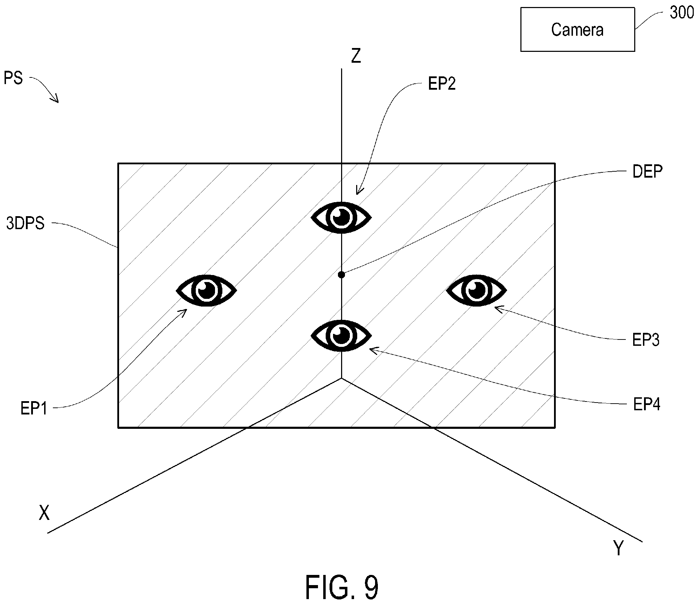

FIG. 5 is a schematic diagram of the position of a preset eye position in the spatial coordinate system. Referring to FIG. 5, in an embodiment, the controller 100 is configured to determine the position of the stereoscopic image SI on the 3D projection plane 3DPS according to the preset eye position DEP. The preset eye position DEP may be set by the controller 100. Alternatively, the preset eye position DEP may be determined by sensing the position of the eyes of the viewer in space within the included angle range of the non-planar projection surface PS through the camera 300 communicatively connected to the controller 100, as shown in FIG. 1 and FIG. 9.

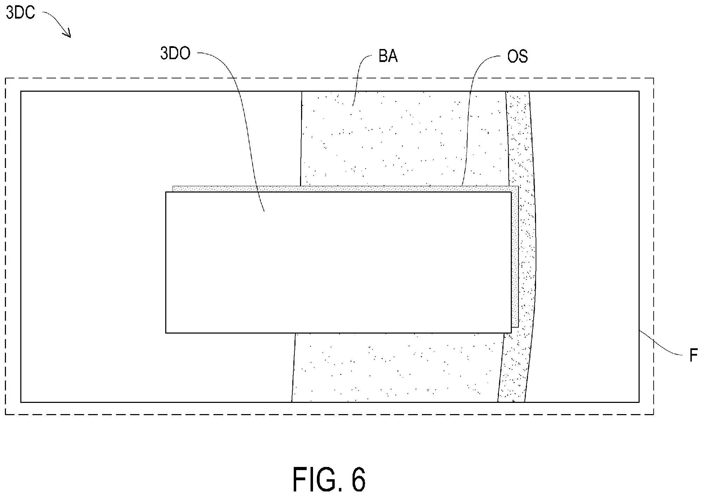

FIG. 6 is a schematic diagram of 3D content image in a projection system according to an embodiment of the disclosure. Referring to FIG. 6, in this embodiment, the 3D content image 3DC at least includes a 3D object 3DO, an outer frame F, a derived background BA, or an object shadow OS corresponding to the 3D object 3DO. The 3D object 3DO uses, for example, a 3D object in a developed 3D object library. Connecting the outer frame F to the physical environment (i.e., the non-planar projection surface PS) and extending the 3D object 3DO to the outer frame F facilitate in further enhancing the stereoscopic effect of the stereoscopic image SI. The derived background BA and the object shadow OS may also enhance the stereoscopic effect of the stereoscopic image SI.

Referring to FIG. 2 and FIG. 3 again, in an embodiment, the controller 100 is configured to generate a transformation matrix according to the angle of projection of the projection position P, the 3D range adjustment matrix, and the preset eye position DEP. The transformation matrix is then used to convert the coordinate values of each pixel of the original image in the projection range PR into coordinate values corresponding to the 3D projection plane 3DPS (the movement of the coordinate values indicated by the arrows in FIG. 3), that is, the coordinate values of 3D content image 3DC is converted into stereoscopic image information SII.

In an embodiment, the above transformation matrix is:

$$M1 \times M2 \times M3,$$

where M1 is the matrix of the angle of projection of the projection apparatus P under the spatial coordinate system CS,

$$M1 = \begin{bmatrix} X_\alpha \\ Y_\alpha \\ Z_\alpha \end{bmatrix}$$, $X_\alpha$ is the angle at which the projection position P projects toward the X-axis of the spatial coordinate system CS, such as 45 degrees. $Y_\alpha$ is the angle at which the projection position P projects toward the Y axis of the spatial coordinate system CS, such as 45 degrees. $Z_\alpha$ is the angle at which the projection position P projects toward the XY plane of the spatial coordinate system CS, such as 0 degrees or other degrees. M2 is the 3D range adjustment matrix of the 3D projection plane 3DPS relative to the coordinate system CS. M3 is the eye position adjustment matrix of the preset eye

$$M3 = \begin{bmatrix} EyeP_x \\ EyeP_Y \\ EyeP_z \end{bmatrix}$$

position DEP in the spatial coordinate system CS, $EyeP_x$ is the X-axis coordinate value of the preset eye position DEP, EyePy is the Y-axis coordinate value of the preset eye position DEP, and $EyeP_z$ is the Z-axis coordinate value of the preset eye position DEP.

In an embodiment, the controller 100 is configured to generate the 3D range adjustment matrix M2 according to the projection range PR and the 3D projection plane 3DPS. The 3D range adjustment matrix M2 is a matrix that converts a matrix formed by coordinate values of four endpoints Px1, Px2, Px3, Px4 of the projection range PR into a matrix formed by coordinate values of four endpoints Fx1, Fx2, Fx3, Fx4 of the 3D projection plane 3DPS under the spatial coordinate system CS, that is, for example:

$$\begin{bmatrix} Px1\text{-}x & Px1\text{-}y & Px1\text{-}z \\ Px2\text{-}x & Px2\text{-}y & Px2\text{-}z \\ Px3\text{-}x & Px3\text{-}y & Px3\text{-}z \\ Px4\text{-}x & Px4\text{-}y & Px4\text{-}z \end{bmatrix} \times M2 = \begin{bmatrix} Fx1\text{-}x & Fx1\text{-}y & Fx1\text{-}z \\ Fx2\text{-}x & Fx2\text{-}y & Fx2\text{-}z \\ Fx3\text{-}x & Fx3\text{-}y & Fx3\text{-}z \\ Fx4\text{-}x & Fx4\text{-}y & Fx4\text{-}z \end{bmatrix},$$

$$M2 = \begin{bmatrix} EP\text{-}x \\ EP\text{-}y \\ EP\text{-}z \end{bmatrix},$$

where (Px1-x, Px1-y, Px1-z) are respectively the X-axis, Y-axis and Z-axis coordinates of the endpoint Px1 of the projection range PR, (Px2-x, Px2-y, Px2-z) are respectively the X-axis, Y-axis and Z-axis coordinates of the endpoint Px2 of the projection range PR, (Px3-x, Px3-y, Px3-z) are respectively the X-axis, Y-axis and Z-axis coordinates of the endpoint Px3 of the projection range PR, (Px4-x, Px4-y, Px4-z) are respectively the X-axis, Y-axis and Z-axis coordinates of the endpoint Px4 of the projection range PR, (Fx1-x, Fx1-y, Fx1-z) are respectively the X-axis, Y-axis and Z-axis coordinates of the end point Fx1 of the 3D projection plane 3DPS, (Fx2-x, Fx2-y, Fx2-z) are respectively the X-axis, Y-axis and Z-axis coordinates of the end point Fx2 of the 3D projection plane 3DPS, (Fx3-x, Fx3-y, Fx3-z) are respectively the X-axis, Y-axis and Z-axis coordinates of the end point Fx3 of the 3D projection plane 3DPS, (Fx4-x, Fx4-y, Fx4-z) are respectively the X-axis, Y-axis and Z-axis coordinates of the end point Fx4 of the 3D projection plane 3DPS, and each element in (EP-x, EP-y, EP-z) is a 1×3 matrix.

Therefore, the coordinate value of each point of the stereoscopic image SI in the 3D projection plane 3DPS may be obtained by, for example, the following conversion:

$$\begin{bmatrix} P_X \\ P_Y \\ P_Z \end{bmatrix} \times M1 \times M2 \times M3,$$

where $(P_x, P_y, P_z)$ are respectively the X-axis, Y-axis and Z-axis coordinate values of each point of the original picture in the projection range PR. For example, the controller 100 executes an application program to convert the original picture (3D content image 3DC) through a transformation matrix to generate stereoscopic image information SII. The size of the stereoscopic image SI is smaller than the projection range PR.

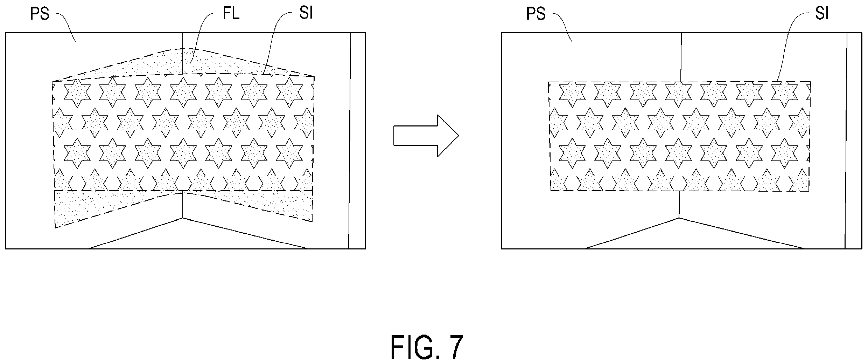

FIG. 7 is a schematic diagram of a projection system that reduces stray light according to an embodiment of the disclosure. Referring to FIG. 1 and FIG. 7, in an embodiment, the projection system 10 further includes an ambient light sensor 30 and an ambient light source 40. The controller 100 is configured to receive the ambient light brightness signal AL and output the ambient light source adjustment signal ALA according to the ambient light brightness signal AL to reduce stray light (floating light FL) generated by the image beam IB on the non-planar projection surface PS. The ambient light brightness signal AL comes from, for example, the ambient light sensor 30, and the controller 100 is communicatively connected to the ambient light sensor 30. The ambient light sensor 30 is, for example, a brightness sensor. The controller 100 is also communicatively connected to the ambient light source 40 and controls the brightness output by the ambient light source 40 by outputting the ambient light source adjustment signal ALA. The ambient light source 40 is, for example, a light bulb, an LED light source, etc. Therefore, as shown in FIG. 7, stray light (floating light FL) is generated from the projection apparatus 200 projecting the image beam IB onto the projection surface PS. The controller 100 may adjust the brightness output by the ambient light source 40 according to the ambient light brightness signal AL, so that the brightness of the floating light FL and the brightness output by the ambient light source 40 generate a high contrast, thereby eliminating the impact of the floating light FL in space on the perception of the viewer of the stereoscopic image SI.

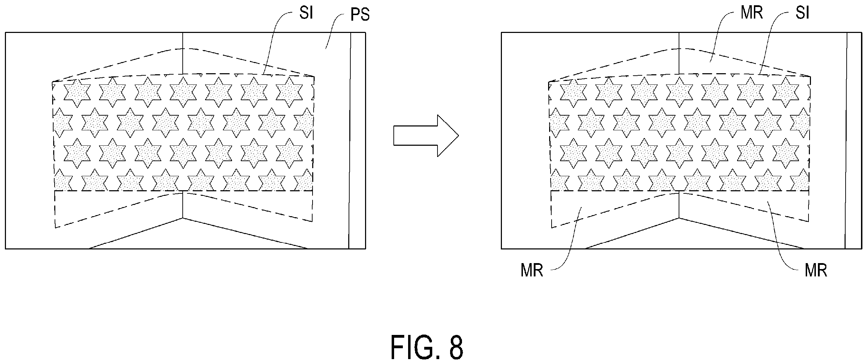

FIG. 8 is a schematic diagram of a projection system forming a mask region on the 3D projection plane according to an embodiment of the disclosure. Referring to FIG. 8, in an embodiment, through the above method, the controller 100 obtains the coordinate values of the stereoscopic image SI in the 3D projection plane 3DPS, compares the coordinate values of the stereoscopic image SI with the coordinate values of the projection range PR, and obtains a region of difference between the two. The controller 100 is configured to control the projection apparatus 200 to generate the image beam IB, so that the projection apparatus 200 forms the mask region MR in a region of the 3D projection plane 3DPS that does not display the stereoscopic image SI.

FIG. 9 is a schematic diagram of a projection system sensing the positions of eyes in space through a camera according to an embodiment of the disclosure. Referring to FIG. 1 and FIG. 9, in an embodiment, the projection system 10 further includes a camera 300. The camera 300 is communicatively connected to the controller 100 to dynamically sense the positions EP1, EP2, EP3, and EP4 of at least one eye (single eye) in space. The controller 100 is configured to obtain the preset eye position DEP according to the positions EP1, EP2, EP3, and EP4 of at least one eye. In an embodiment, the controller 100 determines the position at which the stereoscopic image SI is presented on the 3D projection plane 3DPS according to the preset eye position DEP. In another embodiment, the camera 300 is configured to sense the positions of multiple eyes EP1, EP2, EP3, and EP4 within the field of view of the image beam IB. The controller 100 is configured to obtain a preset eye position according to the center position of the positions of multiple eyes EP1, EP2, EP3, and EP4, and the controller is configured to determine the position of the stereoscopic image on the 3D projection plane according to the preset eye position. The preset eye position DEP may be the center position represented by the average coordinate value of the coordinate values of positions EP1, EP2, EP3, and EP4.

Based on the above, in an embodiment of the disclosure, the projection system 10 includes a non-planar projection surface PS, a projection apparatus 200, and a controller 100. The controller 100 is configured to provide stereoscopic image information SII and transmit the stereoscopic image information SII to the projection apparatus 200.

The projection apparatus 200 is configured to project the image beam IB onto the non-planar projection surface PS according to the stereoscopic image information SII. The stereoscopic image SI is presented within the field of view of the image beam IB. Therefore, the projection system 10 may use the projection apparatus 200 to generate a good stereoscopic image SI without wearing stereoscopic image-generating equipment (e.g., glasses, AR/MR display devices, etc.). In addition to substantially reducing costs, the projection system 10 allow for the adjustment of the position that the stereoscopic image SI is presented in accordance with the venue or intended application.

In an embodiment, the projection system 10 may also dynamically adjust the position of the stereoscopic image SI according to the human eye positions EP1, EP2, EP3, and EP4 (or the preset eye position DEP), so that the projection system 10 has a better viewing experience.

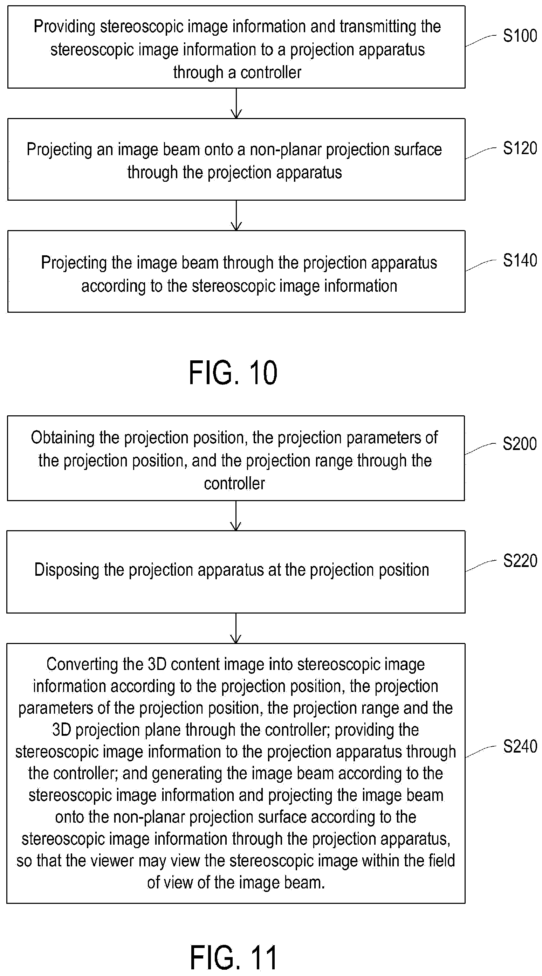

FIG. 10 is a flowchart of a method of forming a stereoscopic image according to an embodiment of the disclosure. Referring to FIG. 10 first, an embodiment of the disclosure provides a method of forming a stereoscopic image, which includes the following steps. In step S100, the controller 100 provides the stereoscopic image information SII and transmits the stereoscopic image information SII to the projection apparatus 200. In step S120, the projection apparatus 200 projects the image beam IB onto the non-planar projection surface PS. In step S140, the projection apparatus 200 projects the image beam IB according to the stereoscopic image information SII, in which the stereoscopic image SI is presented within the field of view of the image beam IB.

FIG. 11 is a flowchart of a method of forming a stereoscopic image, in which the projection position, the projection parameters of the projection position P, the projection range, and the 3D projection plane are obtained by the controller according to an embodiment of the disclosure. Referring to FIG. 11, in an embodiment, the method of forming a stereoscopic image further includes the following steps. In step S200, the controller 100 obtains the projection position P, the projection parameters of the projection position P, and the projection range PR. In step S220, the projection apparatus 200 is disposed at the projection position P. In step S240, the controller 100 converts the 3D content image 3DC into stereoscopic image information SII according to the projection position P, the projection parameters of the projection position P, the projection range PR and the 3D projection plane 3DPS. The controller 100 provides the stereoscopic image information SII to the projection apparatus 200. The projection apparatus 200 generates the image beam IB according to the stereoscopic image information SII and projects the image beam IB onto the non-planar projection surface PS, so that the viewer may view the stereoscopic image SI formed on the 3D projection plane 3DPS within the field of view of the image beam IB.

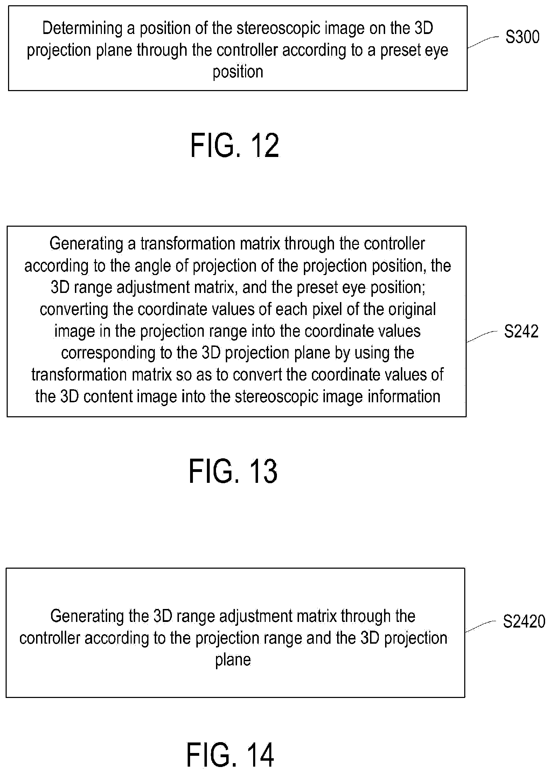

FIG. 12 is a flowchart of a method of forming a stereoscopic image, in which the position of the stereoscopic image on a 3D projection plane is determined through a preset eye position according to an embodiment of the disclosure. Referring to FIG. 12, in an embodiment, in step S300, the controller 100 determines the position of the stereoscopic image SI on the 3D projection plane 3DPS according to the preset eye position DEP.

FIG. 13 is a flowchart of converting the 3D content image into stereoscopic image information in step S240 of FIG. 11. Referring to FIG. 11 and FIG. 13, in an embodiment, the above-mentioned step S240 further includes the following steps. In step S242, a transformation matrix is generated through the controller 100 according to an angle of projection of the projection position P, a 3D range adjustment matrix, and the preset eye position DEP. The coordinate values of each pixel of an original image in the projection range PR is converted into the coordinate values corresponding to the 3D projection plane 3DPS by using the transformation matrix to convert the coordinate values of the 3D content image 3DC into stereoscopic image information SII.

FIG. 14 is a flowchart of generating a 3D range adjustment matrix in step S242 of FIG. 13. Referring to FIG. 13 and FIG. 14, in an embodiment, the above-mentioned step S242 further includes the following steps. In step S2420, the controller 100 generates a 3D range adjustment matrix according to the projection range PR and the 3D projection plane 3DPS.

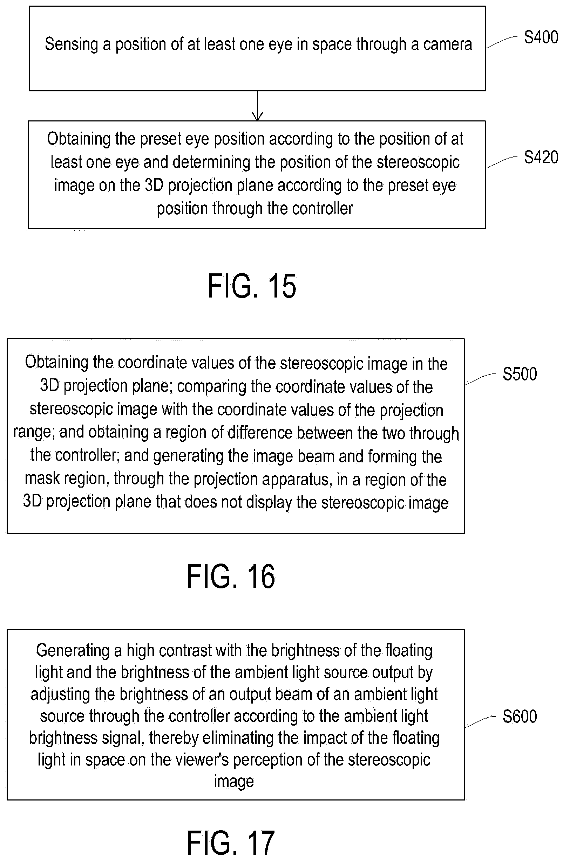

FIG. 15 is a flowchart of a method of forming a stereoscopic image, in which the positions of eyes in space are sensed through a camera according to an embodiment of the disclosure. Referring to FIG. 15, in another embodiment, the method of forming a stereoscopic image further includes the following steps. In step S400, the camera 300 senses the positions EP1, EP2, EP3, and EP4 of at least one eye in space (within the field of view of the image beam). In step S420, the controller 100 obtains/calculates the preset eye position DEP according to the positions EP1, EP2, EP3, and EP4 of at least one eye, and determines a position of the stereoscopic image SI on the 3D projection plane 3DPS according to the preset eye position DEP.

FIG. 16 is a flowchart of a method of forming a stereoscopic image, in which a mask region is formed on the 3D projection plane according to an embodiment of the disclosure. Referring to FIG. 16, in an embodiment, the method of forming a stereoscopic image further includes the following steps. In step S500, the controller 100 obtains the coordinate values of the stereoscopic image SI in the 3D projection plane 3DPS, compares the coordinate values of the stereoscopic image SI with the coordinate values of the projection range PR, and obtains a region of difference between the two. The controller 100 controls the projection apparatus 200 to generate the image beam IB, so that the projection apparatus 200 forms the mask region MR in a region of the 3D projection plane 3DPS that does not display the stereoscopic image SI.

FIG. 17 is a flowchart of a method of forming a stereoscopic image, in which the impact of floating light on the perception of the stereoscopic image of the viewer is eliminated according to an embodiment of the disclosure. Referring to FIG. 17, in an embodiment, the method of forming a stereoscopic image further includes the following steps. In step S600, the controller 100 may adjust the brightness of an output beam of the ambient light source 40 according to the ambient light brightness signal AL, so that the brightness of the floating light FL of the image beam IB and the brightness of the output beam of the ambient light source 40 generate a high contrast, that is, the brightness of the output beam of the ambient light source 40 is greater than the brightness of the floating light FL, thereby eliminating the impact of the floating light FL in space on the perception of the viewer of the stereoscopic image SI.

To sum up, in the projection system and the method of forming a stereoscopic image according to the embodiments of the disclosure, stereoscopic image information is provided and the stereoscopic image information is transmitted to a projection apparatus through a controller. An image beam is projected onto a non-planar projection surface through the projection apparatus, so that a stereoscopic image is presented within a field of view of the image beam. Therefore, the projection system and the method of forming a stereoscopic image may generate a good stereoscopic image by using a single projection apparatus without the necessity for viewers to wear stereoscopic image-generating equipment. In addition to substantially reducing costs, the aforementioned projection system and method of forming a stereoscopic image allow for the adjustment of the position of the stereoscopic image presentation in accordance with the venue or intended application.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby to enable persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the term "the disclosure", "the disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the concept and scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the disclosure. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

**Claims**

1. A projection system, comprising:

   a non-planar projection surface (PS);
   a projection apparatus (200); and
   a controller (100), communicatively connected to the projection apparatus (200), wherein the controller (100) is configured to provide stereoscopic image information (SII) and transmit the stereoscopic image information (SII) to the projection apparatus (200), the projection apparatus (200) is configured to project an image beam (IB) onto the non-planar projection surface (PS) according to the stereoscopic image information (SII), wherein a stereoscopic image (SI) is presented within a field of view of the image beam (IB).

2. The projection system according to claim 1, further comprising: a terminal apparatus (20), wherein the controller (100) is communicatively connected to the terminal apparatus (20), the terminal apparatus (20) is configured to provide a projection position (P), projection parameters of the projection position (P), and a projection range (PR) to the controller (100), the controller (100) is configured to convert a 3D content image (3DC) into the stereoscopic image information (SII) according to the projection position (P), the projection parameters of the projection position (P), the projection range (PR), and a 3D projection plane (3DPS), the controller (100) is configured to provide the stereoscopic image information (SII) to the projection apparatus (200), the projection apparatus (200) is configured to generate the image beam (IB) according to the stereoscopic image information (SII), so that the stereoscopic image (SI) is formed on the 3D projection plane (3DPS) within the field of view of the image beam (IB).

3. The projection system according to claim 2, wherein the 3D content image (3DC) at least comprises a 3D object (3DO), an outer frame (F), a derived background (BA), or an object shadow (OS) corresponding to the 3D object (3DO).

4. The projection system according to claim 2 or 3, wherein the controller (100) is configured to determine a position of the stereoscopic image (SI) on the 3D projection plane (3DPS) according to a preset eye position (DEP).

5. The projection system according to any of claim 2, 3 or 4, further comprising:
a camera (300), communicatively connected to the controller (100), configured to sense a position of at least one eye (EP1, EP2, EP3, EP4) within the field of view of the image beam (IB), wherein the controller (100) is configured to obtain a preset eye position (DEP) according to the position of the at least one eye (EP1, EP2, EP3, EP4), the controller (100) is configured to determine a position of the stereoscopic image (SI) on the 3D projection plane (3DPS) according to the preset eye position (DEP).

6. The projection system according to any of the preceding claims 2-5, wherein the controller (100) is configured to generate a transformation matrix according to an angle of projection of the projection position (PR), a 3D range adjustment matrix (M2), and a preset eye position (DEP), the controller (100) is configured to convert coordinate values of each pixel of an original image in the projection range (PR) into coordinate values corresponding to the 3D projection plane (3DPS) by using the transformation matrix to convert the 3D content image (3DC) into the stereoscopic image information (SII).

7. The projection system according to claim 6, wherein the controller (100) is configured to generate the 3D range adjustment matrix (M2) according to the projection range (PR) and the 3D projection plane (3DPS), wherein the 3D range adjustment matrix (M2) is a matrix that converts a matrix formed by coordinate values of four endpoints of the projection range (PR) into a matrix formed by coordinate values of four endpoints of the 3D projection plane (3DPS).

8. The projection system according to any of the preceding claims 2-7, wherein the controller (100) is configured to control the image beam (IB) generated by the projection apparatus (200) to form a mask region (MR) in a region of the 3D projection plane (3DPS) that does not display the stereoscopic image (SI).

9. The projection system according to any of the preceding claims 2-8, wherein the controller (100) is communicatively connected to an ambient light sensor (30) and an ambient light source (40), the ambient light sensor (30) is configured to provide an ambient light brightness signal (AL), the controller (100) is configured to provide an ambient light source adjustment signal (ALA), the controller (100) is configured to adjust brightness of an output beam of the ambient light source (40) according to the ambient light brightness signal (AL), thereby generating a high contrast between brightness of a floating light (FL) of the image beam (IB) and the brightness of the output beam of the ambient light source (40).

10. A method of forming stereoscopic image, comprising:

providing (S100) stereoscopic image information (SII) and transmitting the stereoscopic image information (SII) to a projection apparatus (200) through a controller (200);
projecting (S120) an image beam (IB) onto a non-planar projection surface (PS) through the projection apparatus (200); and
projecting (S140) the image beam (IB) through the projection apparatus (200) according to the stereoscopic image information (SII), wherein a stereoscopic image (SI) is presented within a field of view of the image beam (IB).

11. The method of forming stereoscopic image according to claim 10, further comprising:

providing a projection position (P), projection parameters of the projection position (P), and a projection range (PR) to the controller (100) through a terminal apparatus (20);
converting a 3D content image (3DC) into the stereoscopic image information (SII) through the controller (100) according to the projection position (P), the projection parameters of the projection position (P), the projection range (PR), and a 3D projection plane (3DPS);
providing the stereoscopic image information (SII) to the projection apparatus (200) through the controller (100);

generating the image beam (IB) through the projection apparatus (200) according to the stereoscopic image information (SII); and

forming the stereoscopic image (SI) on the 3D projection plane (3DPS) within the field of view of the image beam (IB).

12. The method of forming stereoscopic image according to claim 11, wherein the 3D content image (3DC) at least comprises a 3D object (3DO), an outer frame (F), a derived background (BA), or an object shadow (OS) corresponding to the 3D object (3DO).

13. The method of forming stereoscopic image according to claim 11 or 12, further comprising: determining a position of the stereoscopic image (SI) on the 3D projection plane (3DPS) through the controller (100) according to a preset eye position (DEP).

14. The method of forming stereoscopic image according to any one of the claims 11, 12 or 13 further comprising:

sensing a position of at least one eye (EP1, EP2, EP3, EP4) within the field of view of the image beam (IB) through a camera (300);

obtaining a preset eye position (DEP) according to the position of the at least one eye (EP1, EP2, EP3, EP4); and determining a position of the stereoscopic image (SI) on the 3D projection plane (3DPS) according to the preset eye position (DEP) through the controller (100).

15. The method of forming stereoscopic image according to any one of the claims 11-14, further comprising:

generating a transformation matrix through the controller (100) according to an angle of projection of the projection position (P), a 3D range adjustment matrix (M2), and a preset eye position (DEP); and converting coordinate values of each pixel of an original image in the projection range (PR) into coordinate values corresponding to the 3D projection plane (3DPS) so as to convert the 3D content image (3DC) into the stereoscopic image information (SII) through the controller (100) using the transformation matrix.

FIG. 1

EP 4 629 611 A1

FIG. 2

FIG. 3

FIG. 4

FIG. 5

EP 4 629 611 A1

EP 4 629 611 A1

FIG. 6

FIG. 7

FIG. 8

EP 4 629 611 A1

FIG. 9

Providing stereoscopic image information and transmitting the stereoscopic image information to a projection apparatus through a controller — S100

Projecting an image beam onto a non-planar projection surface through the projection apparatus — S120

Projecting the image beam through the projection apparatus according to the stereoscopic image information — S140

# FIG. 10

Obtaining the projection position, the projection parameters of the projection position, and the projection range through the controller — S200

Disposing the projection apparatus at the projection position — S220

Converting the 3D content image into stereoscopic image information according to the projection position, the projection parameters of the projection position, the projection range and the 3D projection plane through the controller; providing the stereoscopic image information to the projection apparatus through the controller; and generating the image beam according to the stereoscopic image information and projecting the image beam onto the non-planar projection surface according to the stereoscopic image information through the projection apparatus, so that the viewer may view the stereoscopic image within the field of view of the image beam. — S240

# FIG. 11

Determining a position of the stereoscopic image on the 3D projection plane through the controller according to a preset eye position ⟋ S300

FIG. 12

Generating a transformation matrix through the controller according to the angle of projection of the projection position, the 3D range adjustment matrix, and the preset eye position; converting the coordinate values of each pixel of the original image in the projection range into the coordinate values corresponding to the 3D projection plane by using the transformation matrix so as to convert the coordinate values of the 3D content image into the stereoscopic image information ⟋ S242

FIG. 13

Generating the 3D range adjustment matrix through the controller according to the projection range and the 3D projection plane ⟋ S2420

FIG. 14

Sensing a position of at least one eye in space through a camera ⌐ S400

Obtaining the preset eye position according to the position of at least one eye and determining the position of the stereoscopic image on the 3D projection plane according to the preset eye position through the controller ⌐ S420

FIG. 15

Obtaining the coordinate values of the stereoscopic image in the 3D projection plane; comparing the coordinate values of the stereoscopic image with the coordinate values of the projection range; and obtaining a region of difference between the two through the controller; and generating the image beam and forming the mask region, through the projection apparatus, in a region of the 3D projection plane that does not display the stereoscopic image ⌐ S500

FIG. 16

Generating a high contrast with the brightness of the floating light and the brightness of the ambient light source output by adjusting the brightness of an output beam of an ambient light source through the controller according to the ambient light brightness signal, thereby eliminating the impact of the floating light in space on the viewer's perception of the stereoscopic image ⌐ S600

FIG. 17

## EUROPEAN SEARCH REPORT

**Application Number**

EP 25 16 1350

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 105 282 535 A (SHENHUA SCIENCE & TECHNOLOGY SHENZHEN CO LTD) 27 January 2016 (2016-01-27) | 1-4,6-8, 10-13,15 | INV. H04N9/31 G02B30/00 |
| Y | * the whole document * * figures 1-6 * * Summary * * paragraphs [0025], [0031] - [0033] * * paragraphs [0047], [0049] * * paragraphs [0069] - [0071] * ----- | 5,9,14 | H04N13/302 H04N13/363 ADD. G03B21/00 |
| Y | US 2020/366876 A1 (TAKAO YOSHIYUKI [JP]) 19 November 2020 (2020-11-19) * the whole document * * figures 7,8 * * paragraphs [0098] - [0100] * * paragraphs [0133] - [0142]; figures 14,16 * ----- | 5,14 | |
| Y | CN 109 521 564 A (FORYOU MULTIMEDIA ELECTRONICS) 26 March 2019 (2019-03-26) * the whole document * * paragraph [0038]; figures 7,8 * ----- | 9 | |

**TECHNICAL FIELDS SEARCHED (IPC)**

H04N
G03D
G02B
G03B

The present search report has been drawn up for all claims

| Place of search | Date of completion of the search | Examiner |
|---|---|---|
| The Hague | 19 June 2025 | Thollot, Julien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 1350

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2025

| Patent document cited in search report | | Publication date | Patent family member(s) | | Publication date |
|---|---|---|---|---|---|
| CN 105282535 | A | 27-01-2016 | NONE | | |
| US 2020366876 | A1 | 19-11-2020 | CN | 111630848 A | 04-09-2020 |
| | | | US | 2020366876 A1 | 19-11-2020 |
| | | | WO | 2019146426 A1 | 01-08-2019 |
| CN 109521564 | A | 26-03-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• TW 113112682